# EUROPEAN PATENT SPECIFICATION

(11) **EP 4 540 352 B1**
(45) Date of publication and mention of the grant of the patent: **31.12.2025**
(21) Application number: 23734061.7
(22) Date of filing: 08.06.2023
(51) Int. Cl.: C22B 1/245, C10L 5/04, C10L 5/14, C10L 5/36, C10L 5/44, C10B 53/02, C22B 1/244

(54) **BINDER AND MANUFACTURING METHODS**
BINDEMITTEL UND HERSTELLUNGSVERFAHREN
LIANT ET PROCÉDÉS DE FABRICATION

(30) Priority: 14.06.2022 WO PCT/IB2022/055500
(43) Date of publication of application: 23.04.2025
(73) Proprietor: ArcelorMittal, 1160 Luxembourg (LU)
(72) Inventor: PERNOT, Paul, 57000 Metz (FR); ROZHKOVA, Tatiana, 57470 Hombourg Haut (FR)
(74) Representative: Lavoix
(86) International application number: PCT/IB2023/055936
(87) International publication number: WO 2023/242687

(56) References cited:
- WO-A1-2019/200424
- CN-A- 101 443 465
- RU-C1- 2 733 946

## Description

The invention is related to a binder to produce briquettes, pellets or any other agglomerated material. The invention is also related to a manufacturing method of said binder and to a manufacturing method of briquettes using said binder.

Steel can be currently produced at an industrial scale through two main manufacturing routes. Nowadays, most used production route consists in producing pig iron in a blast furnace, this process relying on two main raw materials; sintered iron ore to be reduced and coke as reducing agent. Both those raw materials require respectively a sinter plant and a coking plant to be produced, both of those plants being big CO2, and more globally pollutants, emitter.

In order to reduce its environmental footprint steel industry is looking for solutions to produce iron and/or carbon-bearing materials without the need of the sintering and coking processes.

To do so new cold-based manufacturing processes are considered, such as extrusion, briquetting or pelletizing. All of those processes require the use of a binder.

Patent JP 2018-165301 A describes a method in which charcoal briquettes are formed using a binder formed by mixing waste plastic and woody biomass in a solvent made of coal-tar. WO 2019/200424 A1 discloses a method of producing a solid composite, the method comprising: providing a bio-crude formed from the heat treatment of a carbonaceous feedstock comprising biomass, the bio-crude being capable of hardening at elevated temperature; mixing the bio-crude with a solid or paste to form a green composite; and heating the green composite to produce a hardened solid composite.

However, this kind of binder is based on fossil carbon and comprises toxic compound such as BTX which are mixtures of Benzene, Toluene, and Xylene and Polycyclic Aromatic Hydrocarbons (PAH). Those are pollutants which have been determined to be highly toxic, mutagenic, carcinogenic, teratogenic, and immune-toxicogenic to various life forms.

There is so a need for a binder with a reduced environmental, including carbon, footprint. There is also a need for materials to be used in steelmaking industry which have a reduced carbon footprint.

This problem is solved by a binder according to the invention, comprising from 80% to 90% in weight of a pyrolysis oil resulting from the pyrolysis of biomass and from 10% to 20% in weight of thermoplastics.

The binder of the invention may also comprise the following optional characteristics considered separately or according to all possible technical combinations:
- thermoplastics is chosen among polyethylene, polystyrene, polycarbonate or styrene derivate.
- thermoplastics is expanded polystyrene.
- biomass is lignocellulosic biomass.

The invention is also related to a manufacturing method of a binder comprising mixing and heating at a temperature from 150°C to 220°C, a pyrolysis oil resulting from the pyrolysis of biomass with thermoplastics to produce a binder in such proportions that said binder comprises from 80% to 90% in weight of pyrolysis oil and from 10% to 20% in weight of thermoplastics.

The manufacturing method of the invention may also comprise the following optional characteristics considered separately or according to all possible technical combinations:
- the pyrolysis of biomass is performed at a temperature from 450°C to 700°C,
- the method further comprises the steps of pyrolysis of a biomass to produce a biochar and a pyrolysis oil, removing water from the pyrolysis oil so that final content of water in the dewatered pyrolysis oil is inferior to 5wt.% and mixing said dewatered pyrolysis oil with thermoplastics to produce a binder in such proportions that said binder comprises from 80 to 90wt.% of dewatered pyrolysis oil and from 10 to 20wt.% of thermoplastics,
- the water removal step is chosen among a decantation step, a fractional condensation step and a fractional crystallisation step,
- after the water removal step the dewatered pyrolysis oil is subjected to a decarbonisation step before being mixed with thermoplastics,
- thermoplastics are densified before mixing,
- the hot binder is cast in mould to produce binder ingot,

The invention is also related to a manufacturing method of a briquette comprising the step of mixing at least one material with a binder according to anyone of the following combinations and subjecting said mixture to a compression step to form a briquette.

The briquette manufacturing method of the invention may also comprise the following optional characteristics considered separately or according to all possible technical combinations:
- the at least one material is chosen among coking coal, biochar, iron ore or a steelmaking by-product,
- the material is biochar,
- the material is roll mill sludge.

The invention is also related to a raw material comprising a binder according to the invention and at least one material chosen among coking coal, biochar, iron ore or a steelmaking by-product.

Other characteristics and advantages of the invention will emerge clearly from the description of it that is given below by way of an indication and which is in no way restrictive.

A binder according to the invention comprises from 80% to 90% in weight of a pyrolysis oil resulting from the pyrolysis of biomass and from 10% to 20% in weight of thermoplastics.

Pyrolysis process is the thermal decomposition of materials at elevated temperatures in an inert atmosphere. The pyrolysis of biomass produces a biochar or bio coal, a pyrolysis gas (or syngas) and a pyrolysis oil, also called bio-crude or bio-oil. Thermal conversion of biomass, which is done under oxygen-free conditions process, allows to remove volatile organic compounds and cellulose components from the feedstock and create a solid biofuel with characteristics like the ones of fossil coal.

In a method according to the invention the pyrolysis process is preferentially performed at a temperature from 450°C to 700°C to maximise biochar and pyrolysis oil yields. As a matter of example, the pyrolysis may be performed using a heated screw, biomass is charged into a fuel container and is extracted by a feeding screw from the container up to the pyrolysis screw where it is heated to a temperature from 450°C to 700°C. Biochar thus formed is extracted at the end of the screw and stored in a container. Pyrolysis gas is collected through a pipe up to a gas cooler, for example a condenser, which separate the crude pyrolysis oil from the gas. Microwave-assisted pyrolysis (MAP) could also be used.

Biomass is renewable organic material that comes from plants and animals. Biomass sources include notably wood and wood processing wastes such as firewood, wood pellets, and wood chips, lumber and furniture mill sawdust and waste, and black liquor from pulp and paper mills, agricultural crops and waste materials such as corn, soybeans, sugar cane, switchgrass, woody plants, and algae, and crop and food processing residues, but also biogenic materials in municipal solid waste such as paper, cotton, and wool products, and food, yard, and wood wastes, animal manure and human sewage. In the sense of the invention, biomass may also encompass plastics residues, such as recycled waste plastics like Solid Refuse Fuels or SRF.

In a preferred embodiment, biomass is lignocellulosic biomass.

In order to form the binder, the pyrolysis oil is mixed with thermoplastics in such proportions that said binder comprises from 80% to 90% in weight of pyrolysis oil and from 10% to 20% in weight of thermoplastics, this mixing is performed at a temperature from 150°C to 220°C.

The thermoplastics are preferentially chosen among polyethylene, polystyrene, polycarbonate or styrene derivate and are more preferentially expanded polystyrene. Polystyrene may be used under its different forms (expanded polystyrene EPS, dense polystyrene), recycled polystyrene can also be used. The amount of thermoplastics with the pyrolysis-oil governs the thermoplastic properties of the binder. Above 20wt.% of thermoplastics produce a harden bio-binder at room-temperature which may then be fragile, while less than 10wt.% of waste thermoplastics produce a more malleable bio-binder at room temperature which is difficult to store and manipulate.

In a preferred method of producing a binder according to the invention, after the pyrolysis of the biomass, and before being mixed with thermoplastics, the pyrolysis oil is subjected to a water removal step. Most of the formed water is chemically produced during the pyrolysis process and does not come from the biomass material. This water removal step allows to limit acidity and corrosion risks of the produced binder and to increase efficiency of the production process of the binder. Indeed, water presence may slow down the production and increase energy needs.

This water removal step may be performed with different technologies, among them being decantation, fractional condensation, or fractional crystallisation.

In a preferred embodiment the low-density thermoplastics like expanded Polystyrene (EPS) are subjected to a pre-treatment step before mixing with pyrolysis oil, which is a densification step, such as a chemical densification step as described in patent WO 1998 023 672. In a preferred embodiment solvent used for the densification step is d-limonene. This allows to reduce the volume of thermoplastics to be mixed with the pyrolysis oil to reach the appropriate binder composition.

In a preferred embodiment, the hot binder resulting from the mixing is cast in mould to form ingot at room temperature. This allows an easier handling and storage of the binder.

The binder according to the invention may be used for the manufacturing of extruded, pelletized, briquetted, or agglomerated material. In a manufacturing method of a briquette according to the invention, at least one material is mixed with a binder as previously described and the mixture is subjected to a compression step to form a briquette. The at least one material may be chosen among coking coal, biochar, iron ore or a steelmaking by-product.

Other manufacturing technologies might be used, such as extrusion, pelletizing or agglomeration to produce a raw material using a binder according to the invention and at least one material chosen among coking coal, biochar, iron ore or a steelmaking by-product. The steelmaking by-product is preferably roll mill sludge. It may also be iron fines.

In a preferred embodiment biochar resulting from the pyrolysis of biomass is mixed with a binder according to the invention comprising the pyrolysis oil from this same pyrolysis process and subjected to the briquetting step to produce biochar briquettes. These biochar briquettes may then be charged for example in a blast furnace, or in an electric arc furnace, smelting furnace or direct reduction furnace as carbon source.

In another embodiment the binder is mixed with oxidized iron ore and biochar and subjected to a pelletizing step to form combined iron-biochar pellets. Those pellets may then be subjected to a direct reduction process to reduce oxidized iron.

### Example 1

Six binders B1 to B6 were prepared using different basis to be mixed with thermoplastics.

Binder B1 to B4 are binders according to the invention and comprise 85% in weight of pyrolysis oil resulting from the respective pyrolysis of straw, beech, saw-dust and pine tree at 450°C during 45 minutes at a heating rate of about 10°C/min in a pyrolysis screw equipment as previously described and 15% in weight of Expanded Polystyrene (EPS).

B5 is a binder composed of 85wt.% coal tar + 15wt.% EPS and B6 is a binder composed of 85wt.% coal tar sludges + 15wt.% EPS. B5 and B6 are according to prior art.

Production process of the six binders was the same, mixing of the respective proportion of oil / coal tar with EPS at a temperature of 250°C during 2 hours. Chemical composition of the six binders have then been analysed, results being illustrated in table 1.

**Table 1 (*prior art)**

| | B1 | B2 | B3 | B4 | B5* | B6* |
|---|---|---|---|---|---|---|
| Basis | Oil from Straw pyrolysis | Oil from Beech pyrolysis | Oil from Saw Dust pyrolysis | Oil from Pine Tree pyrolysis | Coal Tar | Coal Tar sludges |
| Sulphur (wt.% on dry basis) | 0,09 | 0,01 | 0,01 | 0,02 | 0,35 | 0,47 |
| BTX (mg/kg) | 0,6 | 0,2 | 0,2 | 3 | 202,7 | 100,7 |
| HAP (mg/kg) | 37 | 65 | 8,9 | 98,2 | 54100 | 114470 |

The binders according to the invention (B1 to B4) contain less Sulphur, less BTX and less HAP, they are thus less detrimental to the environment.

### Example 2

A set of biochar briquettes was prepared using biochar as filler and a binder according to the invention. Beech wood was used as biomass. Resulting pyrolysis oil was mixed with 15wt.% of EPS to form a binder according to the invention. The biochar was crushed so that the final granulometry is below 2mm for at least 70% of biochar particles. Then crushed biochar was mixed at a ratio 80wt.% of biochar, 20wt.% of binder at a temperature of around 150°C. Mixture is then roll-pressed in a roll-press machine with a hydraulic pressure of around 700 bar to ensure a linear pressure along wheels having a 160 mm width of 3 tons/ cm of width of wheels.

A higher amount of binder is necessary compared to coal briquetting wherein around 10wt.% is usually added. This is due to the higher porosity of biochars versus coal. Cold compressive strength of each briquette was then measured. 20 determinations were done on individual briquettes pressed with an Adamel hydraulic press operating in the range 0 - 2000 N.

All measurements were between 1000 and 2000N which is a sufficient value to consider use of those briquettes for charging into a blast furnace as replacement for coke.

With a binder according to the invention it is thus possible to produce biochar briquettes with a reduced environmental footprint which are suitable for use in a blast furnace.

### Example 3

A first set of briquettes was prepared, using same briquetting process as for example 2, with 90wt.% of coal mixed with 10wt.% of a binder according to the invention having same composition of the binder of example 2.

A second set was prepared, using same briquetting process, with 90wt.% of coal mixed with 10wt.% of petroleum pitches as binder, a binder according to prior art.

Cold compressive strength of each briquette was then measured using same machine as described in previous example.

Mean value of the compressive strength of the briquettes produced with the binder according to the invention was of 1890N which is higher than the mean value of 650 N for the briquettes produced with the binder according to prior art.

With the same amount of binder according to the invention as prior art binder it was possible to prepare briquettes with a higher compressive strength. This compressive strength is a key characteristic of the briquettes to ensure they may be handled, transported or stored without being deteriorated.

### Example 4

Iron briquettes were prepared using 8wt.% of a binder according to the invention with 92wt.% in weight of iron ore concentrate containing 65.8wt.% of iron.

The binder used comprises 85wt.% of pyrolysis oil from beech wood with 15wt.% EPS.

Briquette properties were then analysed, iron content of the briquettes was 63.3wt.% As a comparison a briquette of sintered ore manufactured with same iron ore has an iron content comprised between 56 and 58wt.%. Cold strength of the briquette was high and superior to 20MPa which ensure handling and charging in good conditions without risk of deterioration of the briquette.

## Claims

1. A binder for extruded, pelletized, briquetted, or agglomerated material, said binder comprising from 80% to 90% in weight of a pyrolysis oil resulting from the pyrolysis of biomass and from 10% to 20% in weight of thermoplastics.

2. Binder according to claim 1, said thermoplastics being chosen among polyethylene, polystyrene, polycarbonate or styrene derivate.

3. Binder according to claim 2 wherein thermoplastics is expanded polystyrene.

4. Binder according to anyone of claims 1 to 3 wherein biomass is lignocellulosic biomass.

5. Method to produce a binder comprising mixing and heating at a temperature from 150°C to 220°C, a pyrolysis oil resulting from the pyrolysis of biomass with thermoplastics to produce a binder in such proportions that said binder comprises from 80% to 90% in weight of pyrolysis oil and from 10% to 20% in weight of thermoplastics.

6. Method according to claim 5 wherein the pyrolysis of biomass is performed at a temperature from 450°C to 700°C.

7. Method to produce a binder according to claim 5 or 6 comprising the steps of:
a. Pyrolysis of a biomass to produce a biochar and a pyrolysis oil,
b. Removing water from the pyrolysis oil so that final content of water in the dewatered pyrolysis oil is inferior to 5wt.%,
c. Mixing said dewatered pyrolysis oil with thermoplastics to produce a binder in such proportions that said binder comprises from 80 to 90wt.% of dewatered pyrolysis oil and from 10 to 20wt.% of thermoplastics.

8. Method according to claim 7 wherein the water removal step is chosen among a decantation step, a fractional condensation step and a fractional crystallisation step.

9. Method according to claims 7 or 8 wherein after the water removal step the dewatered pyrolysis oil is subjected to a decarbonisation step before being mixed with thermoplastics.

10. Method according to anyone of claims 5 to 9 wherein thermoplastics are densified before mixing.

11. Method according to anyone of claims 5 to 10 wherein the hot binder is cast in mould to produce binder ingot.

12. Manufacturing method of a briquette comprising the step of mixing at least one material with a binder according to anyone of claims 1 to 4 and subjecting said mixture to a compression step to form a briquette.

13. Manufacturing method according to claim 12 wherein the at least one material is chosen among coking coal, biochar, iron ore or a steelmaking by-product.

14. Manufacturing method according to claim 13 wherein the material is biochar.

15. Manufacturing method according to claim 13 wherein the material is roll mill sludge.

16. Raw material comprising a binder according to anyone of claims 1 to 4 and at least one material chosen among coking coal, biochar, iron ore or a steelmaking by-product.

## Patentansprüche

1. Bindemittel für extrudiertes, pelletiertes, brikettiertes oder agglomeriertes Material, wobei das Bindemittel zu 80 Gew.-% bis 90 Gew.-% ein Pyrolyseöl umfasst, das aus der Pyrolyse von Biomasse entsteht, und zu 10 Gew.-% bis 20 Gew.-% Thermoplasten umfasst.

2. Bindemittel nach Anspruch 1, wobei die Thermoplasten aus Polyethylen, Polystyrol, Polycarbonat oder Styrolderivat ausgewählt sind.

3. Bindemittel nach Anspruch 2, wobei die Thermoplasten expandiertes Polystyrol sind.

4. Bindemittel nach einem der Ansprüche 1 bis 3, wobei die Biomasse lignocellulosehaltige Biomasse ist.

5. Verfahren zum Herstellen eines Bindemittels, das das Mischen und Erhitzen eines Pyrolyseöls, das aus der Pyrolyse von Biomasse mit Thermoplasten entsteht, bei einer Temperatur von 150 °C bis 220 °C umfasst, um ein Bindemittel in solchen Anteilen herzustellen, dass das Bindemittel zu 80 Gew.-% bis 90 Gew.-% Pyrolyseöl und zu 10 Gew.-% bis 20 Gew.-% Thermoplasten umfasst.

6. Verfahren nach Anspruch 5, wobei die Pyrolyse von Biomasse bei einer Temperatur von 450 °C bis 700 °C durchgeführt wird.

7. Verfahren zum Herstellen eines Bindemittels nach Anspruch 5 oder 6, das die Schritte umfasst:
a. Pyrolysieren einer Biomasse, um eine Biokohle und ein Pyrolyseöl herzustellen,
b. Entfernen von Wasser aus dem Pyrolyseöl, so dass der Endgehalt von Wasser in dem entwässerten Pyrolyseöl weniger als 5 Gew.-% beträgt,
c. Mischen des entwässerten Pyrolyseöls mit Thermoplasten, um ein Bindemittel in solchen Anteilen zu erhalten, dass das Bindemittel zu 80 bis 90 Gew.-% entwässertes Pyrolyseöl und zu 10 bis 20 Gew.-% Thermoplasten umfasst.

8. Verfahren nach Anspruch 7, wobei der Wasserentfernungsschritt aus einem Dekantierungsschritt, einem Schritt der fraktionierten Kondensation und einem Schritt der fraktionierten Kristallisation ausgewählt ist.

9. Verfahren nach Anspruch 7 oder 8, wobei das entwässerte Pyrolyseöl nach dem Wasserentfernungsschritt einem Entkarbonisierungsschritt unterzogen wird, bevor das Mischen mit Thermoplasten erfolgt.

10. Verfahren nach einem der Ansprüche 5 bis 9, wobei die Thermoplasten vor dem Mischen verdichtet werden.

11. Verfahren nach einem der Ansprüche 5 bis 10, wobei das Heißbindemittel in Form gegossen wird, um eine Bindemittelbramme herzustellen.

12. Verfahren zum Herstellen eines Briketts, das den Schritt des Mischens zumindest eines Materials mit einem Bindemittel nach einem der Ansprüche 1 bis 4 und das Unterziehen des Gemischs einem Kompressionsschritt, um ein Brikett zu bilden, umfasst.

13. Herstellungsverfahren nach Anspruch 12, wobei das zumindest eine Material aus Kokskohle, Biokohle, Eisenerz oder einem Stahlproduktionsnebenprodukt ausgewählt ist.

14. Herstellungsverfahren nach Anspruch 13, wobei das Material Biokohle ist.

15. Herstellungsverfahren nach Anspruch 13, wobei das Material Walzwerkschlamm ist.

16. Rohmaterial, das ein Bindemittel nach einem der Ansprüche 1 bis 4 und zumindest ein Material umfasst, das aus Kokskohle, Biokohle, Eisenerz oder einem Stahlproduktionsnebenprodukt ausgewählt ist.

## Revendications

1. Liant pour matériau extrudé, pastillé, briqueté ou aggloméré, ledit liant comprenant de 80 % à 90 % en poids d'une huile de pyrolyse résultant de la pyrolyse de biomasse et de 10 % à 20 % en poids de thermoplastiques.

2. Liant selon la revendication 1, dans lequel lesdits thermoplastiques sont choisis parmi le polyéthylène, le polystyrène, le polycarbonate et les dérivés de styrène.

3. Liant selon la revendication 2, dans lequel les thermoplastiques consistent en polystyrène expansé.

4. Liant selon l'une quelconque des revendications 1 à 3, dans lequel la biomasse est une biomasse lignocellulosique.

5. Procédé pour produire un liant, comprenant le mélange et le chauffage à une température de 150°C à 220°C d'une huile de pyrolyse résultant de la pyrolyse de biomasse avec des thermoplastiques pour produire un liant en des proportions telles que ledit liant comprenne de 80 % à 90 % en poids d'huile de pyrolyse et de 10 % à 20 % en poids de thermoplastiques.

6. Procédé selon la revendication 5, dans lequel la pyrolyse de biomasse est effectuée à une température de 450°C à 700°C.

7. Procédé pour produire un liant selon la revendication 5 ou 6, comprenant les étapes de :
a. pyrolyse d'une biomasse pour produire un biocharbon et une huile de pyrolyse,
b. élimination de l'eau dans l'huile de pyrolyse de façon que la teneur finale en eau de l'huile de pyrolyse asséchée soit inférieure à 5 % en poids,
c. mélange de ladite huile de pyrolyse asséchée avec des thermoplastiques pour produire un liant en des proportions telles que ledit liant comprenne de 80 % à 90 % en poids d'huile de pyrolyse asséchée et de 10 à 20 % en poids de thermoplastiques.

8. Procédé selon la revendication 7, dans lequel l'étape d'élimination de l'eau est choisie parmi une étape de décantation, une étape de condensation fractionnée et une étape de cristallisation fractionnée.

9. Procédé selon la revendication 7 ou 8, dans lequel, après l'étape d'élimination de l'eau, l'huile de pyrolyse asséchée est soumise à une étape de décarbonisation avant d'être mélangée avec les thermoplastiques.

10. Procédé selon l'une quelconque des revendications 5 à 9, dans lequel les thermoplastiques sont densifiés avant mélange.

11. Procédé selon l'une quelconque des revendications 5 à 10, dans lequel le liant chaud est coulé dans un moule pour produire un lingot de liant.

12. Procédé de fabrication d'une briquette, comprenant l'étape de mélange d'au moins un matériau avec un liant selon l'une quelconque des revendications 1 à 4 et de soumission dudit mélange à une étape de compression pour former une briquette.

13. Procédé de fabrication selon la revendication 12, dans lequel l'au moins un matériau est choisi parmi le charbon à coke, le biocharbon, le minerai de fer et un sous-produit de fabrication de l'acier.

14. Procédé de fabrication selon la revendication 13, dans lequel le matériau est un biocharbon.

15. Procédé de fabrication selon la revendication 13, dans lequel le matériau est une boue de laminoir.

16. Matière première comprenant un liant selon l'une quelconque des revendications 1 à 4 et au moins un matériau choisi parmi le charbon à coke, le biocharbon, le minerai de fer et un sous-produit de fabrication de l'acier.
